# FASCICULE DE BREVET EUROPEEN

(11) **EP 2 410 626 B1**
(45) Date de publication et mention de la délivrance du brevet: **28.01.2015**
(21) Numéro de dépôt: 11173593.2
(22) Date de dépôt: 12.07.2011
(51) Int. Cl.: H02G 5/06

(54) **Ligne de transport d'électricite a isolation gazeuse**
Gasisolierte Hochspannungsleitung
Gas-insulated electric power transmission line

(30) Priorité: 22.07.2010 FR 1055999
(43) Date de publication de la demande: 25.01.2012
(73) Titulaire: ALSTOM Technology Ltd, 5400 Baden (CH)
(72) Inventeur: BERTINATO, Alberto, 69100 Villeurbanne (FR); MARQUEZIN, Gwenäel, 69100 VILLEURBANNE (FR); DREVON, Gérard, 69500 BRON (FR)
(74) Mandataire: Ilgart, Jean-Christophe

(56) Documents cités:
- US-A- 3 585 270
- US-A1- 2007 131 442

## Description

### DOMAINE TECHNIQUE

L'invention concerne une ligne de transport d'électricité à isolation gazeuse comportant un support isolant agencé entre une enveloppe tubulaire externe et un conducteur interne.

### ÉTAT DE LA TECHNIQUE ANTÉRIEURE

Une ligne de transport d'électricité à isolation gazeuse consiste principalement en un conducteur tubulaire en aluminium agencé à l'intérieur d'une enveloppe et coaxialement à celle-ci. Un gaz, tel que, par exemple, de l'hexafluorure de soufre (SF6) remplit l'enveloppe pour isoler électriquement l'enveloppe du conducteur.

En utilisation, le conducteur transporte une puissance de l'ordre de 1000 à 2000 mégawatts (MW) sous une tension de l'ordre de 245000 à 400000 volts (V), tandis que l'enveloppe est à un potentiel nul.

Il est donc important de garantir une bonne isolation électrique entre l'enveloppe et le conducteur.

La ligne de transport est exposée aux conditions climatiques extérieures. L'enveloppe et le conducteur se dilatent alors, et se déplacent l'un par rapport à l'autre, principalement le long de l'axe principal de la ligne.

Le maintien du conducteur en position par rapport à l'enveloppe, est réalisé par une pluralité de supports en matériau isolant qui sont répartis le long de la ligne.

Les supports sont réalisés de manière à permettre un déplacement relatif du conducteur par rapport à l'enveloppe, le long de l'axe de la ligne de transport, à cause des dilatations distinctes de l'enveloppe et du conducteur.

Selon un premier mode de réalisation des supports, par exemple décrit dans les documents EP 0, 983, 624 et US 3, 585, 270, une première extrémité radiale de chaque support est fixée au conducteur et la deuxième extrémité radiale est en contact glissant contre la face interne de l'enveloppe.

Selon un deuxième mode de réalisation des supports, par exemple décrit dans les documents EP 0,423, 665 et US 2, 396, 131, une première extrémité radiale de chaque support est fixée à l'enveloppe et la deuxième extrémité radiale est en contact glissant avec le conducteur.

Quel que soit le mode d'assemblage du support avec l'enveloppe et le conducteur, le glissement relatif du support par rapport au conducteur ou par rapport à l'enveloppe génère par frottement des particules provenant du support, du conducteur ou de l'enveloppe.

Certaines particules sont en matériau conducteur électrique, ce qui peut nuire à l'isolation électrique entre le conducteur et l'enveloppe.

Pour réduire tout risque de court-circuit lié à la présence de ces particules, il a été proposé de piéger les particules par l'ajout d'anneaux externes, comme décrit par exemple dans le document US 4, 330, 682 ou par l'ajout de plaques pare-effluves, comme décrit dans le document EP 0,423, 665.

Bien que de telles solutions soient satisfaisantes en termes d'efficacité, elles impliquent l'ajout de composants dans la ligne de transport qui sont complexes à réaliser et à assembler dans la ligne.

L'invention a pour but de proposer une ligne de transport d'énergie comportant un nombre limité de composants permettant de capter les particules produites par frottement.

### EXPOSÉ DE L'INVENTION

L'objet principal de l'invention est une ligne de transport d'énergie électrique à isolation gazeuse comportant une enveloppe tubulaire contenant un gaz diélectrique ; un conducteur tubulaire agencé à l'intérieur de l'enveloppe et coaxialement à l'enveloppe ; et au moins un support isolant qui relie le conducteur à l'enveloppe, le support étant d'orientation principale radiale par rapport à un axe principal A de l'enveloppe, et comporte une première extrémité radiale externe qui est fixée à l'enveloppe, et une deuxième extrémité radiale interne qui est reliée au conducteur de manière à maintenir le conducteur à distance radiale par rapport à l'enveloppe, la deuxième extrémité du support et le conducteur étant aptes à glisser l'un par rapport à l'autre selon une direction parallèle à l'axe principal A de l'enveloppe,
caractérisée en ce que la deuxième extrémité du support est agencée à l'intérieur du conducteur et est en contact glissant contre au moins une portion interne du conducteur en au moins un point de contact, et en ce que au moins une gorge de récupération ouverte vers le haut est agencée à l'intérieur du conducteur et est située au-dessous de chaque point de contact de la deuxième extrémité du support avec la portion interne du conducteur.

Le glissement de contact entre le support et le conducteur s'effectue à l'intérieur du conducteur, les particules sont donc produites dans le conducteur. Aussi, la gorge étant située dans le conducteur, les particules ne peuvent sortir hors du conducteur.

Les particules ne risquent donc pas de venir entre le conducteur et l'enveloppe.

De préférence, ladite au moins une gorge est formée par une partie inférieure de la paroi tubulaire du conducteur.

De préférence, le conducteur comporte une ouverture qui s'étend au moins en partie le long d'une génératrice de la paroi tubulaire et qui est traversée par le support.

De préférence, l'ouverture est réalisée au niveau d'une génératrice inférieure de la paroi tubulaire, et en ce que le conducteur comporte deux gorges de récupération réparties de part et d'autre de l'ouverture.

De préférence, chaque bord de l'ouverture est prolongé vers l'intérieur du conducteur soit par une cloison, soit par un bossage qui délimite au moins en partie la gorge de récupération.

De préférence, une extrémité radiale du bossage coopère avec la deuxième extrémité du support pour le maintien du conducteur à distance radiale par rapport à l'enveloppe.

De préférence, la deuxième extrémité du support porte une plaque transversale globalement parallèle à l'axe A, et le conducteur comporte des nervures qui s'étendent globalement radialement vers l'intérieur du conducteur depuis une face interne de la paroi tubulaire du conducteur, et qui s'appuient vers le bas sur les extrémités transversales de ladite plaque horizontale.

De préférence, la plaque comporte une lumière située au-dessus de chacune des deux gorges.

De préférence, la plaque comporte des murets qui s'étendent verticalement vers le haut depuis les bords transversaux de la plaque.

### BRÈVE DESCRIPTION DES DESSINS

D'autres caractéristiques et avantages de l'invention apparaîtront à la lecture de la description détaillée qui va suivre pour la compréhension de laquelle on se reportera aux dessins annexés dans lesquels .
- la figure 1 est une représentation schématique d'une ligne de transport selon l'invention représenté en coupe suivant un plan perpendiculaire à l'axe principal de la ligne ;
- la figure 2 est une représentation schématique en perspective d'une ligne de transport selon une variante de réalisation de l'invention ;
- la figure 3 est un détail en perspective et à plus grande échelle d'une ligne de transport selon encore une autre variante de réalisation de l'invention.

### EXPOSÉ DÉTAILLÉ DE MODES DE RÉALISATION PARTICULIERS

Dans la description qui va suivre, des éléments identiques, analogues ou similaires seront désignés par les mêmes références.

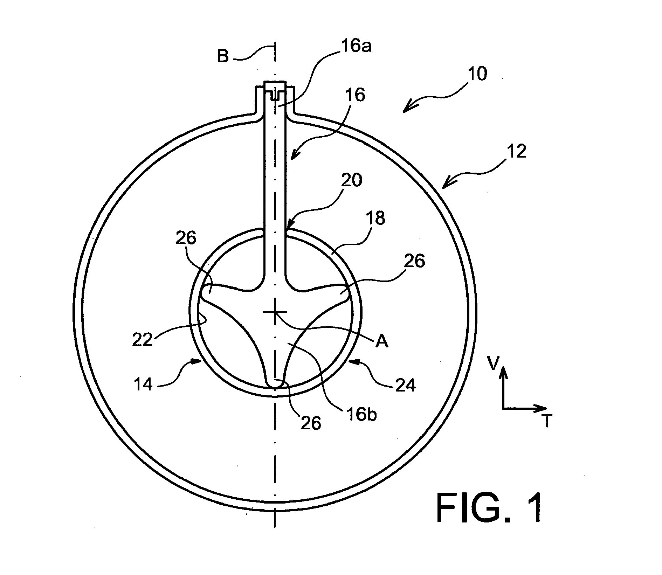

A titre non limitatif et en vue de faciliter la compréhension de la description et des revendications, on adoptera les orientations Transversale et Verticale en référence au repère T, V indiqué sur la figure 1.

On a représenté à la figure 1 une ligne 10 de transport d'énergie à isolation gazeuse comportant une enveloppe tubulaire externe 12 réalisée en un matériau métallique, d'axe principal A.

La ligne 10 comporte aussi un conducteur tubulaire 14 réalisé en un matériau conducteur électrique, par exemple en aluminium, qui est agencé à l'intérieur de l'enveloppe 12 de manière que le conducteur 14 est globalement coaxial à l'enveloppe 12, c'est-à-dire coaxial à l'axe A.

Le conducteur 14 est destiné à être parcouru par le courant électrique à transporter. L'enveloppe 12 est parcourue par un courant électrique de retour de même ordre de grandeur que le courant électrique parcourant le conducteur 14.

Un gaz diélectrique comprenant par exemple de l'hexafluorure de soufre (SF6) et de l'azote (N₂) est contenu dans l'enveloppe 12, et réalise une isolation électrique du conducteur 14 par rapport à l'enveloppe 12.

Cela permet par exemple de porter l'enveloppe à un potentiel électrique nul, tandis que le conducteur est parcouru par un courant électrique fourni par un réseau électrique de puissance d'environ 1000 à 2000 mégawatts (MW) sous une tension d'environ 250000 à 400000 volts (V).

Le conducteur 14 est maintenu en position par rapport à l'enveloppe 12 par l'intermédiaire d'une pluralité de supports 16, dont un seul support 16 est représenté aux figures pour chaque mode de réalisation.

Les supports 16 sont répartis le long de la ligne de transport 10, pour répartir le poids du conducteur 14 à tous les supports 16, et pour limiter la flexion du conducteur 14, entre deux supports 16.

Dans la description qui va suivre, on fera référence à un seul support 16. Les supports 16 étant identiques, il sera compris que la description du support 16 qui sera faite s'applique par analogie aux autres supports 16 de la ligne 10.

Le support 16 est d'orientation principale radiale par rapport à l'axe principal A de la ligne 10, l'axe principal B du support est donc lui aussi radial par rapport à l'axe principal A de la ligne 10. Le support est réalisé en matériau isolant, pour ne pas relier électriquement l'enveloppe 12 avec le conducteur 14.

Une première extrémité 16a du support 16, qui est ici l'extrémité radiale externe par rapport à l'axe A, est fixée à l'enveloppe 12, par tout moyen connu.

La deuxième extrémité 16b du support 16, qui est radialement interne par rapport à l'axe A, est reliée au conducteur 14.

La ligne de transport 10 est soumise aux conditions climatiques extérieures, notamment à des variations de température. De plus, l'enveloppe 12 et le conducteur 14 peuvent s'échauffer du fait de pertes par effet joule, lorsqu'ils sont parcourus par le courant électrique.

Ces variations de température extérieure, ainsi que l'échauffement du conducteur 14, se matérialisent par une dilatation ou une contraction de l'enveloppe 12 et du conducteur 14, selon des amplitudes différentes.

Du fait de la structure tubulaire de l'enveloppe 12 et du conducteur 14, leur dilatation ou leur contraction s'effectue en majeure partie parallèlement à l'axe principal A de la ligne.

Par conséquent, puisque le support 16 est fixé à l'enveloppe 12, la dilatation ou la contraction de l'enveloppe 12 et du conducteur 14 produisent un déplacement du conducteur 14 par rapport à la deuxième extrémité 16b du support 16, parallèlement à l'axe A.

Plus précisément, lors de cette dilatation ou contraction, le conducteur 14 et la deuxième extrémité 16b du support 16 glissent, ou frottent, l'un par rapport à l'autre. Il se produit alors des particules fines, résultant de ces frottements entre la deuxième extrémité 16b du support 16 et le conducteur 14.

Si les particules produites à partir du conducteur 14 se retrouvent dans l'espace situé entre le conducteur 14 et l'enveloppe 12, elles risquent de provoquer des court-circuits.

Pour empêcher cela, la liaison entre le support 16 et le conducteur 14 est réalisée de sorte que les particules sont produites et collectées à l'intérieur du conducteur 14.

Ainsi, il n'y a aucun risque que les particules ne parviennent dans la zone annulaire située entre le conducteur 14 et l'enveloppe 12.

La paroi tubulaire 18 du conducteur 14 comporte une ouverture 20 qui est traversée par le support 16, et la deuxième extrémité 16b du support est située à l'intérieur du conducteur 14.

Selon un premier aspect de l'ouverture 20, celle-ci s'étend sur toute la longueur axiale du conducteur 14, c'est-à-dire le long d'une génératrice du conducteur 14.

Une telle ouverture est simple à réaliser car le conducteur 14 est un élément tubulaire, il peut être réalisé par extrusion, dans quel cas la filière utilisée est aménagée pour former l'ouverture.

La deuxième extrémité 16b du support 16 est introduite dans le conducteur 14 par une extrémité axiale, puis est glissée axialement jusqu'à la position correcte.

Selon un deuxième aspect de l'ouverture 20, celle-ci s'étend axialement sur une partie seulement du conducteur 14, la longueur axiale de l'ouverture 20 dépendant du débattement axial du conducteur 14 par rapport à l'enveloppe 12. Le conducteur 14 comporte plusieurs ouvertures 20, chacune étant associée à un support 16.

Ce deuxième aspect de l'ouverture permet d'augmenter la résistance mécanique du conducteur 14.

La deuxième extrémité 16b du support 16 est en contact glissant contre la face cylindrique interne 22 du conducteur 14. Des particules sont produites par le déplacement relatif et le frottement, de la deuxième extrémité 16b du support 16 avec la face interne 22 du conducteur 14.

La collecte de ces particules est réalisée par au moins une gorge 24 agencée à l'intérieur du conducteur 14.

Chaque gorge 24 est située au-dessous d'au moins un point de contact de la deuxième extrémité 16b du support 16 avec la face cylindrique interne 22 du conducteur 14, et est ouverte vers le haut.

Ainsi, du fait de la gravité terrestre, les particules tombent dans la (ou les) gorge(s) 24 et restent à l'intérieur du conducteur 14.

On a représenté à la figure 1 un premier mode de réalisation de la ligne de transport 10, selon lequel l'axe principal B du support 16 est vertical et selon lequel le support 16 est agencé au dessus du conducteur 14, en référence à la gravité terrestre.

Selon ce mode de réalisation, le conducteur 14 est suspendu par le support 16.

La première extrémité 16a du support 16 constitue ainsi l'extrémité supérieure du support 16 et est fixée à une portion supérieure de l'enveloppe 12.

La deuxième extrémité 16b du support 16 est l'extrémité inférieure du support 16, et l'ouverture 20 de la paroi cylindrique 18 du conducteur 14 est réalisée au niveau d'une génératrice supérieure de la paroi cylindrique 18 du conducteur 14.

La deuxième extrémité 16b du support 16 est de forme globalement triangulaire, en section suivant le plan radial de la figure 1. Les côtés du triangle sont concaves, chaque coin 26 du triangle est arrondi et est en contact avec la face interne 22 de la paroi cylindrique 18 du conducteur 14.

Ici, la deuxième extrémité 16b du support 16 est globalement en forme d'un triangle équilatéral qui est centré sur l'axe A et est orientée de manière qu'un coin 26 du triangle se situe dans le prolongement radial du support 16 et les deux autres coins 26 sont répartis de part et d'autre de l'axe principal vertical B du support 16.

La gorge de récupération 24 est formée par la portion inférieure de la paroi cylindrique, qui est située au-dessous des coins 26 du triangle. Cette portion, qui est concave et ouverte vers le haut, recueille les particules qui tombent par gravité.

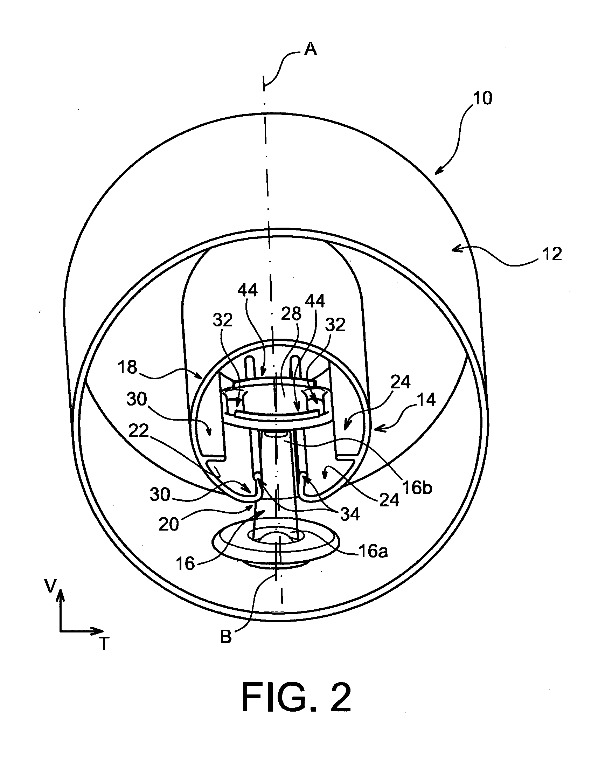

On a représenté à la figure 2 un autre mode de réalisation de l'invention selon lequel l'axe principal B du support 16 est vertical et selon lequel le support est agencé au-dessous du conducteur 14, en référence à la gravité terrestre.

Ainsi, selon ce mode de réalisation, le support 16 soutient le conducteur 14 par le bas.

La première extrémité 16a du support 16 forme ainsi l'extrémité inférieure du support 16 et est fixée à une portion inférieure de l'enveloppe 12.

La deuxième extrémité 16b du support 16 est son extrémité supérieure, et l'ouverture 20 de la paroi cylindrique 18 du conducteur 14 est réalisée au niveau d'une génératrice inférieure de la paroi cylindrique 18 du conducteur 14.

La deuxième extrémité 16b du support porte une plaque 28, qui est parallèle à l'axe principal A de l'enveloppe 12 et parallèle à la direction transversale T. La paroi tubulaire 18 du conducteur 14 comporte deux nervures 30 transversales qui sont agencées symétriquement par rapport à un plan radial vertical médian du conducteur 14, et qui font saillie transversalement vers l'intérieur, par rapport à la face cylindrique interne 22 du conducteur 14.

Chaque nervure 30 est destinée à venir en appui vers le bas contre une portion d'extrémité transversale de la plaque 28, et c'est au niveau de cet appui que le support 16 porte le conducteur 14 et que les particules se produisent par frottement.

La position verticale des nervures 30 sur le conducteur 14 est déterminée en fonction de la hauteur du support 16, et de la position verticale de la plaque 28, pour que le support 14 soit coaxial à l'enveloppe 12.

La récupération des particules produites par le frottement des nervures 30 sur la plaque 28 est réalisée par deux gorges 24 qui sont réparties transversalement de part et d'autre de l'ouverture 20.

Chaque gorge 24 est formée par une partie inférieure de la paroi tubulaire 18 du conducteur 14, qui est adjacente à l'ouverture 20. Chaque gorge 24 est en outre délimitée, au niveau du bord de l'ouverture 20, par une cloison 34 qui s'étend verticalement vers le haut depuis le bord de l'ouverture 20.

Ainsi, chaque gorge est globalement délimitée par une cloison 34 et par une nervure 30.

Comme on peut le voir à la figure 2, une partie centrale de la plaque 28 s'étend au dessus de l'ouverture 20 de passage du support 16 c'est-à-dire qu'aucune gorge 24 n'est située dessous cette partie centrale. De plus, des particules peuvent se déplacer sur la plaque 28 pour atteindre cette partie centrale située au dessus de l'ouverture, puis tomber dans l'ouverture 20.

Pour que les particules produites ne puissent pas atteindre la partie centrale de la plaque 28, la plaque 28 comporte des lumières 32 dont chacune est située transversalement au-dessus d'une gorge 24 associée, c'est à dire entre une extrémité transversale de la plaque 28, sur laquelle une nervure 30 est en appui et la partie centrale de la plaque 28.

Ainsi, les particules produites tombent dans les gorges 24, soit depuis les côtés de la plaque 28, soit en passant au travers des lumières 32.

Pour empêcher que des particules, qui auraient atteint cette partie centrale, de tomber dans l'ouverture 20, et selon une variante de réalisation de la plaque 28, la plaque 28 porte des murets 44 d'orientation principale transversale, qui s'étendent verticalement vers le haut depuis la face supérieure de la plaque 28, et qui sont agencés au niveau des bords transversaux d'extrémité axiale de la plaque 28, selon l'axe principal A.

Par conséquent, la partie centrale de la plaque 28 est délimitée d'une part par les lumières 32 et d'autre part par les murets 44. Ainsi, les particules qui seraient présentes sur la partie centrale de la plaque 28 ne peuvent quitter la plaque 28 qu'en passant au travers des lumières 32, et par conséquent tomber dans les gorges 24.

De préférence, les extrémités transversales de chaque muret 44 sont situées au niveau des lumières 32 de la plaque 28.

Il n'y a alors aucun risque que les particules tombent hors du volume intérieur du conducteur 14.

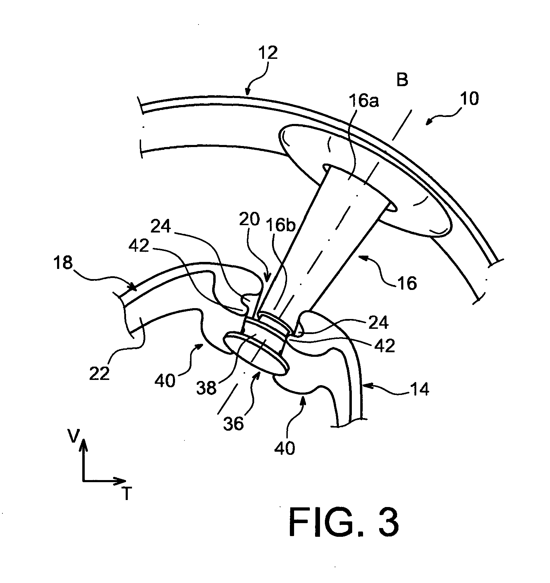

On a représenté à la figure 3 un autre mode de réalisation de la ligne de transport 10 selon lequel le support 16 est situé dessus le conducteur 14.

Selon ce mode de réalisation, le conducteur 14 est suspendu par le support 16.

La première extrémité 16a du support 16 forme ainsi l'extrémité supérieure du support 16 et est fixée à une portion supérieure de l'enveloppe 12.

La deuxième extrémité 16b du support 16 est son extrémité inférieure, et l'ouverture 20 de la paroi cylindrique 18 du conducteur 14 est réalisée au niveau d'une génératrice supérieure de la paroi cylindrique 18 du conducteur 14, la paroi cylindrique 18 du conducteur ne comporte aucune autre ouverture ou découpe.

Ici, l'axe principal B du support 16 est incliné par rapport à l'orientation verticale V, ici vers la droite.

Une telle ligne de transport 10 comporte des supports 16 inclinés vers la droite et des supports 16 inclinés vers la gauche, qui sont répartis le long de la ligne régulièrement, ou alternativement, pour répartir dans les deux sens les contraintes latérales dues au maintien du conducteur 14.

La deuxième extrémité 16b du support 16 porte une tête 36 formant un élément de révolution coaxial à l'axe principal B du support 16 qui s'étend à l'intérieur du conducteur 14. Une gorge annulaire 38 est réalisée dans cette tête 36 et coopère avec la paroi tubulaire 18 du conducteur 14.

Le conducteur 14 comporte des bossages 40 faisant saillie vers l'intérieur par rapport à la face interne 22 de la paroi tubulaire 18, et qui sont situés au niveau des bords de l'ouverture 20.

Une portion d'extrémité 42 de chaque bossage 40 forme une languette qui est repliée perpendiculairement à l'axe principal B du support 16, en direction de l'autre bossage 40.

L'extrémité libre de chaque languette 42 est reçue dans la gorge annulaire 38 de la tête 36 pour réaliser le positionnement radial du conducteur 14 par rapport à l'enveloppe 12 et pour permettre le glissement du conducteur 14 par rapport au support 16.

Du fait de leur forme repliée, ou recourbée, chaque languette 42 délimite une gorge 24 dans laquelle les particules produites par le frottement de la tête 36 avec les languettes 42 peuvent tomber. De plus, une portion inférieure (non représentée) de la paroi tubulaire 18 du conducteur forme aussi une gorge 24 de récupération, de manière similaire au mode de réalisation représenté à la figure 1, pour récupérer les particules qui ne tombent pas dans les gorges délimitées par les languettes 42.

Selon les modes de réalisation représentés aux figures, l'axe principal A de l'enveloppe 12 est horizontal. Il sera compris que la ligne de transport 10 peut être installée en tout endroit et de manière à s'adapter au terrain sur lequel elle est installée.

Ainsi, l'axe principal A peut être incliné par rapport à l'horizontale.

Dans un tel cas, pour les modes de réalisation de l'invention représentés aux figures 1 et 3, la gorge 24 formée par le fond du conducteur 14 se situe constamment au-dessous des points de contact entre la deuxième extrémité 16b du support 16 et la paroi interne du conducteur 14.

Pour le mode de réalisation représenté à la figure 2, pour lequel l'ouverture est située au niveau d'une génératrice inférieure de la paroi cylindrique 18 du conducteur 14, les murets 44 empêchent que les particules ne quittent la plaque 28 en glissant pardessus les bords de la plaque 28.

## Revendications

1. Ligne de transport (10) d'énergie électrique à isolation gazeuse comportant :
- une enveloppe (12) tubulaire contenant un gaz diélectrique ;
- un conducteur (14) tubulaire agencé à l'intérieur de l'enveloppe (12) et coaxialement à l'enveloppe (12) ; et
- au moins un support (16) isolant qui relie le conducteur (14) à l'enveloppe (12),
le support (16) étant d'orientation principale radiale par rapport à un axe principal A de l'enveloppe (12), et comporte une première extrémité (16a) radiale externe qui est fixée à l'enveloppe (12), et une deuxième extrémité (16b) radiale interne qui est reliée au conducteur (14) de manière à maintenir le conducteur (14) à distance radiale par rapport à l'enveloppe (12),
la deuxième extrémité (16b) du support (16) et le conducteur (14) étant aptes à glisser l'un par rapport à l'autre selon une direction parallèle à l'axe principal A de l'enveloppe (12),
**caractérisée en ce que** la deuxième extrémité (16b) du support (16) est agencée à l'intérieur du conducteur (14) et est en contact glissant contre au moins une portion interne du conducteur (14) en au moins un point de contact, et
**en ce que** au moins une gorge de récupération (24) des particules ouverte vers le haut est agencée à l'intérieur du conducteur (14) et est située au-dessous de chaque point de contact de la deuxième extrémité (16b) du support (16) avec la portion interne du conducteur (14).

2. Ligne de transport (10) selon la revendication 1, **caractérisée en ce que** ladite au moins une gorge (24) est formée par une partie inférieure de la paroi (18) tubulaire du conducteur (14).

3. Ligne de transport (10) selon l'une quelconque des revendications précédentes, **caractérisée en ce que** le conducteur (14) comporte une ouverture (20) qui s'étend au moins en partie le long d'une génératrice de la paroi (18) tubulaire et qui est traversée par le support (16).

4. Ligne de transport (10) selon la revendication 3, **caractérisée en ce que** l'ouverture (20) est réalisée au niveau d'une génératrice inférieure de la paroi (18) tubulaire, et **en ce que** le conducteur (14) comporte deux gorges (24) de récupération réparties de part et d'autre de l'ouverture (20).

5. Ligne de transport (10) selon la revendication 3, **caractérisée en ce que** chaque bord de l'ouverture (20) est prolongé vers l'intérieur du conducteur (14) soit par une cloison (34), soit par un bossage (40) qui délimite au moins en partie la gorge de récupération (24).

6. Ligne de transport (10) selon la revendication précédente, **caractérisée en ce qu'**une extrémité radiale du bossage coopère avec la deuxième extrémité (16b) du support (16) pour le maintien du conducteur (14) à distance radiale par rapport à l'enveloppe (12).

7. Ligne de transport (10) selon l'une quelconque des revendications 1 à 5, **caractérisée en ce que** la deuxième extrémité (16b) du support (16) porte une plaque (28) transversale globalement parallèle à l'axe A, et **en ce que**
le conducteur (14) comporte des nervures (30) qui s'étendent transversalement vers l'intérieur du conducteur (14) depuis une face interne (22) de la paroi (18) tubulaire du conducteur (14), et qui s'appuient vers le bas sur les extrémités transversales de ladite plaque (28) horizontale.

8. Ligne de transport (10) selon la revendication précédente, en combinaison avec la revendication 4, **caractérisée en ce que** la plaque (28) comporte une lumière située au-dessus de chacune des deux gorges (24).

9. Ligne de transport (10) selon la revendication 7 ou 8, **caractérisé en ce que** la plaque (28) comporte des murets (44) qui s'étendent verticalement vers le haut depuis les bords transversaux de la plaque (28).

## Patentansprüche

1. Gasisolierte Hochspannungsleitung (10), enthaltend:
- einen rohrförmigen Mantel (12), der ein dielektrisches Gas enthält;
- einen rohrförmigen Leiter (14), der innerhalb des Mantels (12) angeordnet ist und koaxial zum Mantel (12) verläuft; und
- zumindest einen Isolierträger (16), welcher den Leiter (14) mit dem Mantel (12) verbindet,
wobei der Träger (16) eine gegenüber einer Hauptachse A des Mantels (12) radiale Hauptausrichtung hat und ein radiales erstes, äußeres Ende (16a) aufweist, das an den Mantel (12) befestigt ist, sowie ein radiales zweites, inneres Ende (16b), das mit dem Leiter (14) so verbunden ist, dass der Leiter (14) radial im Abstand von dem Mantel (12) gehalten wird,
wobei das zweite Ende (16b) des Trägers (16) und der Leiter (14) dazu geeignet sind, sich gegeneinander in einer Richtung parallel zur Hauptachse A des Mantels (12) gleitend zu verschieben,
**dadurch gekennzeichnet, dass** das zweite Ende (16b) des Trägers (16) innerhalb des Leiters (14) angeordnet ist und an zumindest einem Kontaktpunkt in Gleitkontakt mit zumindest einem inneren Abschnitt des Leiters (14) steht, und
dass zumindest eine Nut (24) zum Auffangen von Partikeln, die nach oben offen ist, innerhalb des Leiters (14) angeordnet ist und unterhalb eines jeden Kontaktpunkts von dem zweiten Ende (16b) des Trägers (16) mit dem Innenabschnitt des Leiters (14) liegt.

2. Hochspannungsleitung (10) nach Anspruch 1, **dadurch gekennzeichnet, dass** die zumindest eine Nut (24) von einem unteren Teil der rohrförmigen Wand (18) des Leiters (14) gebildet wird.

3. Hochspannungsleitung (10) nach einem der vorangehenden Ansprüche, **dadurch gekennzeichnet, dass** der Leiter (14) eine Öffnung (20) aufweist, die sich zumindest teilweise entlang einer Mantelline der rohrförmigen Wand (18) erstreckt und von dem Träger (16) durchquert wird.

4. Hochspannungsleitung (10) nach Anspruch 3, **dadurch gekennzeichnet, dass** die Öffnung (20) im Bereich einer unteren Mantellinie der rohrförmigen Wand (18) ausgebildet ist und dass der Leiter (14) zwei Auffangnuten (24) aufweist, die beiderseits der Öffnung (20) verteilt sind.

5. Hochspannungsleitung (10) nach Anspruch 3, **dadurch gekennzeichnet, dass** jeder Rand der Öffnung (20) in das Innere des Leiters (14) entweder über eine Trennwand (34) oder über eine Erhebung (40) fortgesetzt wird, welche zumindest teilweise die Auffangnut (24) eingrenzt.

6. Hochspannungsleitung (10) nach dem vorangehenden Anspruch, **dadurch gekennzeichnet, dass** ein radiales Ende der Erhebung mit dem zweiten Ende (16b) des Trägers (16) zum Halten des Leiters (14) radial im Abstand von dem Mantel (12) zusammenwirkt.

7. Hochspannungsleitung (10) nach einem der Ansprüche 1 bis 5, **dadurch gekennzeichnet, dass** das zweite Ende (16b) des Trägers (16) eine quer verlaufende Platte (28) trägt, die sich insgesamt parallel zur Achse A erstreckt, und dass
der Leiter (14) Rippen (30) aufweist, die sich quer ins das Innere des Leiters (14) von einer Innenseite (22) der rohrförmigen Wand (18) des Leiters (14) ausgehend erstrecken und sich nach unten an den quer verlaufenden Enden der horizontalen Platte (28) abstützen.

8. Hochspannungsleitung (10) nach dem vorangehenden Anspruch in Kombination mit Anspruch 4, **dadurch gekennzeichnet, dass** die Platte (28) einen Langschlitz aufweist, der sich oberhalb einer jeden Nut (24) befindet.

9. Hochspannungsleitung (10) nach Anspruch 7 oder 8, **dadurch gekennzeichnet, dass** die Platte (28) Leisten (44) aufweist, die sich von den quer verlaufenden Rändern der Platte (28) ausgehend senkrecht nach oben erstrecken.

## Claims

1. A gas-insulated transmission line (10) for transporting electrical power, the line comprising:
· a tubular casing (12) containing a dielectric gas;
· a tubular conductor (14) arranged inside the casing (12), coaxially with the casing (12); and
· at least one insulating support (16) connecting the conductor (14) to the casing (12);
the support (16) being oriented mainly radially relative to a main axis A of the casing (12), and comprising an outer first radial end (16a) that is fastened to the casing (12), and an inner second radial end (16b) that is connected to the conductor (14) in such a manner as to hold the conductor (14) at a radial distance relative to the casing (12);
the second end (16b) of the support (16) and the conductor (14) being suitable for sliding relative to each other along a direction that is parallel to the main axis A of the casing (12);
the gas-insulated transmission line being **characterized in that** the second end (16b) of the support (16) is arranged inside the conductor (14) and is in sliding contact against at least one internal portion of the conductor (14) at at least one point of contact; and
**in that** at least one upwardly-open particles collection gutter (24) is arranged inside the conductor (14) and is situated below each point of contact between the second end (16b) of the support (16) and the internal portion of the conductor (14).

2. A transmission line (10) according to claim 1, **characterized in that** said at least one gutter (24) is formed by a bottom portion of the tubular wall (18) of the conductor (14).

3. A transmission line (10) according to any preceding claim, **characterized in that** the conductor (14) includes an opening (20) that extends at least in part along the length of a generator line of the tubular wall (18) and that has the support (16) passing therethrough.

4. A transmission line (10) according to claim 3, **characterized in that** the opening (20) is made at a bottom generator line of the tubular wall (18), and the conductor (14) includes two collection gutters (24) distributed on either side of the opening (20).

5. A transmission line (10) according to claim 3, **characterized in that** each edge of the opening (20) is extended towards the inside of the conductor (14), either by a partition (34), or by a bead (40) that defines the collection gutter (24) at least in part.

6. A transmission line (10) according to the preceding claim, **characterized in that** one radial end of the bead co-operates with the second end (16b) of the support (16) for holding the conductor (14) at a radial distance relative to the casing (12).

7. A transmission line (10) according to any one of claims 1 to 5, **characterized in that** the second end (16b) of the support (16) carries a transverse plate (28) that is generally parallel to the axis A, and **in that**
the conductor (14) includes splines (30) that extend transversally towards the inside of the conductor (14) from an inside face (22) of the tubular wall (18) of the conductor (14), and that press downwards on the transverse ends of said horizontal plate (28).

8. A transmission line (10) according to the preceding claim, in combination with claim 4, **characterized in that** the plate (28) includes a slot situated above each of the two gutters (24).

9. A transmission line (10) according to claim 7 or claim 8, **characterized in that** the plate (28) includes separation walls (44) that extend vertically upwards from the transverse edges of the plate (28).
